# EUROPÄISCHE PATENTANMELDUNG

(11) **EP 2 434 153 A1**
(43) Veröffentlichungstag der Anmeldung: **28.03.2012**
(21) Anmeldenummer: 10075521.4
(22) Anmeldetag: 25.09.2010
(51) Int. Cl.: F03D 11/02, F03D 11/04

(54) **Turm für Windkraftwerk**

(71) Anmelder: Carl Leiss GmbH, 14052 Berlin (DE)
(72) Erfinder: Reich, Karl Fritz, 14052 Berlin (DE)

(57) **Zusammenfassung**

Reichsturm RT - ein Windkraftwerk mit horizontaler Propellerachse mit aufgesetzten Riemenscheiben oder Scheiben von Flendergetrieben.

In Richtung des Fußpunktes sind in den beweglichen Ständer Transmissionswellen mit Riemenscheiben eingebracht. Über die Riemenscheiben wird von der Rotorwelle über die Transmissionswellen die gewonnene drehbare Energie auf die im Fußpunkt stehende Generatorwelle übertragen.

## Beschreibung

Windkraftwerke WEK mit horizontaler Propellerachsk sind heute (2010) bekannte Maschinen. Das Hauptproblem dieser Kraftwerke. WEK ist die geringe Drehzahl an der Propellerachse. Die Propellerachse dreht normal 100 U/min. Bei den jetzigen Windkraftwerken WEK behelfen sich die Konstrukteure, indem sie schwere Getriebe zwischen der Propellerachse und der Generatorwelle koppeln.

Eine andere Konstruktion ist die Koppelung der Propellerachse mit der Welle eines Läufers von einem vielpoligen Läufer eines Generatorfeldes. Der Einsatz eines Generators mit vielen Polen bedingt, daß der Generator einen sehr grossen Durchmesser hat und demzufolge sehr viel Gewicht hat.

Die Übersetzung mit Riemenantrieb ist bekannt und werden bereits in der Berufsschule gelehrt. So wird in dem Tabellenbuch Wuppertal-Barmen

Verlag Willing & Co.

Freudenstadt 1963

### (s.Abb. 1)

ein solches System gelehrt und beschrieben. Auch in Patentschriften werden Riemenantriebe beschrieben. So gibt es die Offenlegungsschrift 28 51 406 vom Deutschen Patentamt, sowie die Offenlegungsschrift 28 17 483 vom Deutschen Patentamt.

Der Reichsturm RT unterscheidet sich von dem jetzigen Turm der Winkraftwerke WEK, die gebaut sind oder gebaut werden. Der Ständer S ist das Bauelement, das die ganze Mechanik des Systems des Reichsturms RT aufnimmt und mit dem drehbaren Kopf K des Reichsturms verbunden werden kann.

Am Fußpunkt F des Reichsturms RT ist auf einer drehbaren Plattform P das Axial-Gelenklager L montiert. Der Ständer S steht in dem Axial-Gelenklager L. Der Ständer S kann um 2 x 180 Grad mit dem Kopf K gedreht werden und um den Winkel aus der 0-Stellung gekippt werden. In dem Kopf K ist die Rotorwelle W des Rotors mit der Abtriebsriemenscheibe R. Auf der Rotowelle W ist die Bremse B aufgebaut oder angebaut.

Die Rotorwelle W ist in dem Ständer S gelagert. Am Fußpunkt F des Reichsturms RT befindet sich die drehbare Plattform P. Auf der Plattform steht der Generator Ge mit der Generatorwelle G, auf der die Riemenscheibe Z₅ montiert ist. Alternativ können die Riemenscheiben A₄ + Z₅ Spurscheiben eines Flendergetriebes sein.

In Entfernung a in Richtung Fußpunkt F ist die Transmissionswelle T₁ in dem Ständer eingebracht. Auf der Transmissionswelle ist die Riemenscheibe Z₁ und A₁. Um die Abtriebsscheibe R der Rotorwelle W zu der Riemenscheibe Z₁ der Transmissionswelle T₁ ist ein Treibriemen geschlungen. In Entfernung b von der Transmissionswelle T₁ in Richtung Fusspunkt F ist in dem Ständer S die Transmissionswelle T₂ mit der Riemenscheibe Z₂ und A₂ montiert. Um die Riemenscheibe A₁ der Transmissionswelle T₁ zu Riemenscheibe Z₂ der Transmissionswelle T₂ ist ein Treibriemen geschlungen.

In Entfernung c in Richtung Fusspunkt F ist in den Ständer S die Transmissionswelle T₃ mit der Riemenscheibe Z₃ und A₃ montiert. Um die Riemenscheibe A₂ der Transmissionswelle T₂ ist ein Treibriemen zur Riemenscheibe Z₃ der Transmissionswelle T₃ geschlungen.

In Entfernung d in Richtung Fußpunkt F ist die Transmissionswelle T₄ mit der Riemenscheibe Z₄ und A₄ montiert. Um die Riemenscheibe A₃ der Transmissionswelle T₃ ist ein Treibriemen zu der Riemenscheibe Z₄ der Transmissionswelle T₄ geschlungen. Im Abstand e steht der Generator Ge mit der Generatorwelle G. Um die Riemenscheibe A₄ der Transmissionswelle T₄ zu der Riemenscheibe Z₅ ist ein Treibriemen geschlungen. Am Fußpunkt F des Reichsturms RT befindet sich die drehbare Plattform P. Auf der Plattform steht der Generator Ge. Auf der Generatorwelle befindet sich die Riemenscheibe Z₅,

Alternativ können die Riemenscheiben A₄ und Z₄ Spurscheiben eines Flendergetriebes sein. Die Anzahl der Transmissionswellen T, die mit den Bauelementen (Riemenscheiben) in den Ständer S des Reichsturms RT eingebaut werden, kann nach Notwendigkeit bestimmt werden. Das Übersetzungsverhältnis A (abgehend) zu Z (zuführend) muß ermittelt werden. Da hier hohe Leistungen übertragen werden können, muß in Versuchen - auf terristischem Gelände - das Übersetzungsverhältnis A zu Z und die Riemenscheibenbreite für jede Transmissionswelle T für die Bauelemente die Riemenscheiben ermittelt werden.

Der Reichsturm hat anstelle der Gondel einen Kopf, der auf dem oberen Rand der Aussenhülle des Reichsturms RT drehbar aufsitzt. Der benötigte Raum für den Generator ist aus der Gondel auf die Bodenplatte verlagert. In den Kopf kann eine Azimutregelmechanik eingebaut werden. Mit Hilfe der Azimutmechanik wird der Ständer gedreht. Der Propeller wird in den Wind gestellt. Die Regelung kann aber auch an der Generatorplattform wirksam angebracht sein. Der so aufgebaute Reichsturm sieht aus wie die Nachrichtentürme im kalten Krieg, die zwischen Berlin und dem Bundesgebiet aufgestellt worden sind. Da eine solche Konstruktion schlechte Windverhältnisse bringen, wird eine Verkleidung angebracht oder die äußere Form des Turms ist die Verkleidung.

### Wie arbeitet das System Reichsturm RT

Es wird angenommen, der Reichsturm RT ist 100 m hoch. In dieser Höhe ist in dem drehbaren Kopf K die Rotorwelle W im beweglichen Ständer S montiert und .dreht 100 U/min. Auf der gleichene Welle W befindet sich die Riemenscheibe R. In ca. 20 m Entfernung in Richtung Fußpunkt F befindet sich die in dem Ständer S montierte Transmissionswelle T₁ mit den Riemenscheiben A₁ und Z₁. Um die Riemenscheibe R zur Riemenscheibe Z₁ ist ein Treibriemen geschlungen. Es wird hier als Beispiel angenommen, daß der Durchmesser R:Z₁ - 2:1 beträgt.

Dies bedeutet, daß die Transmissionswelle T₁ sich mit 200 U/min. dreht. In 20 m Entfernung von der Transmissionswelle T₁ in Richtung Fußpunkt F ist die Transmissionswelle T₂ montiert.

Auf dieser Transmissionswelle befindet sich die Riemenscheibe A₂ und Z_{2.} Um die Riemenscheibe A₁ zur Riemenscheibe Z₂ ist ein Treibriemen geschlungen. Die Durchmesser A₁ zu Z₂ = 2:1. Dies bedeutet, daß die Transmissionswelle T₂ 400 U/min. dreht.

Das hier beschriebene System setzt sich mit der eingebauten Transmissionswelle Tₓ fort. Für X = Anzahl der eingebauten Transmissionswellen in den Ständer S.

In unserem aufgezeigten Beispiel ist die Transmissionswelle T₄ die letzte vor der Generatorwelle mit der Riemenscheibe A₄. Von hier wird um die Riemenscheibe zu der Riemenscheibe Z₅ des Generators ein Treibriemen geschlungen. Nun können die. einzelnen aufgeführten Riemenscheiben auch Scheiben von Flendergetrieben sein. Dies bedeutet, daß in den einzelnen Stufen die jeweilige Transmissionswelle in der Drehzahl geregelt werden kann. An den Transmissionswellen können - wenn erforderlich - Bremsen angebaut werden. Diese können schalten, wenn ein Riemenriss oder andere Störungen vorliegen.

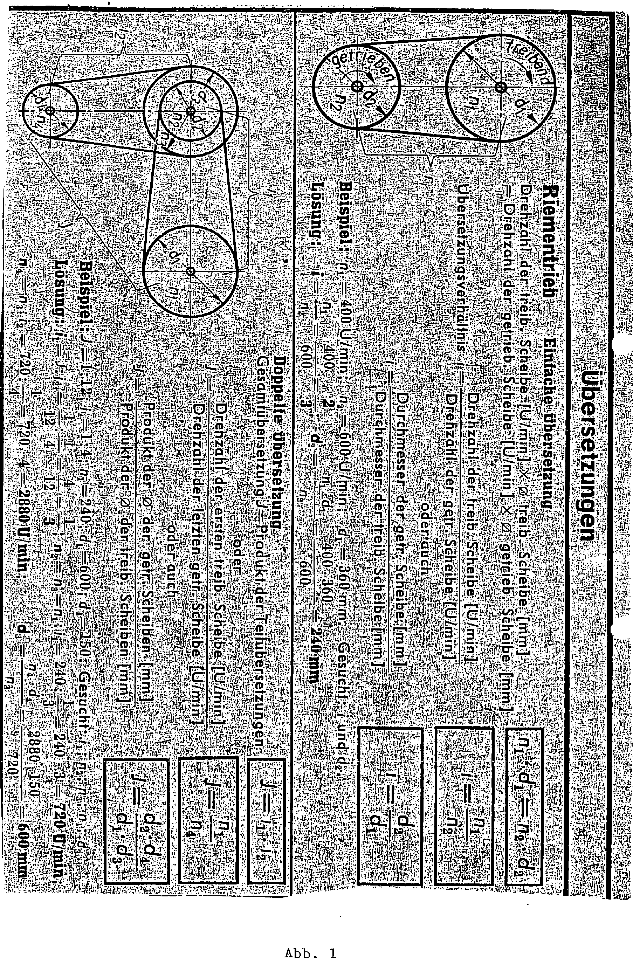

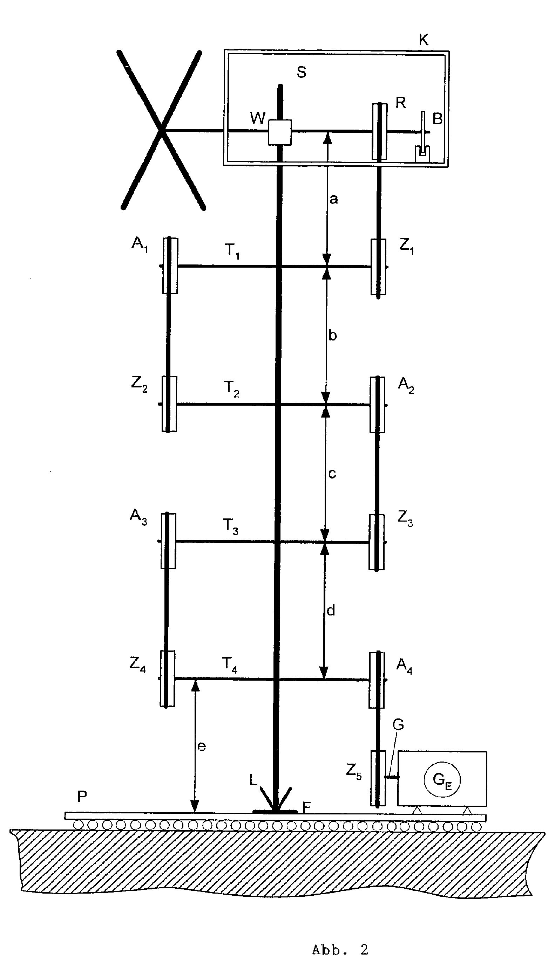

## Patentansprüche

1. Windkraftwerk WEK als Reichsturm RT mit horizontaler Rotorwelle W **dadurch gekennzeichnet, daß** am Fußpunkt F eine drehbare Bodenplatte P mit einem auf der Bodenplatt P aufgebrachten Stehlager L montiert ist, wo in dem Stehlager der Ständer S, der vom Fußpunkt F bis Kopf K, also über die ganze Länge des Reichsturms RT ragt, drehbar und kippbar glagert ist und wo der Ständer S mit dem drehbaren Kopf K flexibel und alternativ fest verbunden ist und wo in dem Ständer S das Lager für die Propellerwelle W eingebracht ist, auf der die Rotorblätter und eine oder mehrere Riemenscheiben R oder Scheiben von Flendergetrieben aufgebracht sind und wo eine oder mehrere Bremsen an oder auf der Propellerwelle W angebracht oder aufgebracht sind oder angebracht oder aufgebracht werden können.

2. Patentanspruch nach Patentanspruch 1 **dadurch gekennzeichnet, daß** der Kopf K des Reichsturms RT auf einer zylinderförmigen Röhre und wo der Querschnitt dieser Röhre jede andere Form als Kreis haben kann, montiert ist und wo durch den Zylinder und wenn notwendig auch durch den Kopf K die Rotorwelle W ragt, die von dem Ständer S aufgenommen ist und wo der Ständer S sich synchron mit dem Kopf K und in bestimmten Stellungen auch selbständig bewegen und der Ständer S mit der gelagerten Rotorwelle W im Winkel & auch gekippt werden kann.

3. Patentanspruch nach Patentanspruch 1 un 2 **dadurch gekennzeichnet, daß** in den Ständer S über die Länge von Kopf K bis zum Fuß F. im Abstand X Transmissionswellen T mit Riemenscheiben A + Z gelagert werden und die aufgesetzten Riemenscheiben auch Scheiben von Flendergetrieben sein können und wo um die Riemenscheiben Treibriemen geschlungen sind und wo um die Flendergetriebescheiben Zahnriemen geschlungen sind und so die auf der Rotorwelle W gewonnene Energie in Form von Drehbewegung, über die auf die Transmissionswellen aufgesetzten Riemenscheiben oder Scheiben von Flendergetrieben auf die Riemenscheiben bzw. Scheibe des Flendergetriebes, die auf der Welle G des Gernerators sitzen, übertragen.

4. Patentanspruch nach Patentanspruch 1,2,3 **dadurch gekennzeichnet, daß** der auf der Bodenplatte P montierte Generator Ge auf der Welle G die Scheibe von einem Flendergetriebe trägt und auf der Transmissionswelle ebenfalls die Scheibe eines Flendergetriebes aufgesetzt ist und über beide Scheiben ein Zahnriemengeschlungen ist und dadurch die Drehzahl an der Generatorwelle G geregelt übertragen werden kann, aber die Flendergetriebescheiben auch normale Riemenscheiben sein können, über die ein Treibriemen geschlungen ist.

5. Patentanspruch nach Patentanspruch 1,2,3,4 **dadurch gekennzeichnet, daß** auf der drehbaren Bodenplatte P der Elektrogenerator GE mit der Antriebswelle G und der Riemenscheibe aufgestellt ist, über die ein Treibriemen zur Riemenscheibe zur Transmissionswelle T geschlagen ist und wo beginnend von der Riemenscheibe der Rotorwelle W über die Transmissionswellen mit der Riemenscheibe A + Z bis zu der Riemenscheibe des Generators GE die Umdrehungen und damit die Leistung auf den Generator GE übertragen wird, wo der Kopf K und die Bodenplatte P und der Ständer S sich selbständig von einander bewegen können.
